(19) Europäisches Patentamt / European Patent Office / Office européen des brevets

(11) **EP 2 615 759 A2**

(12) **EUROPEAN PATENT APPLICATION**


(43) Date of publication:
**17.07.2013 Bulletin 2013/29**

(51) Int Cl.:
***H04L 1/00*** *(2006.01)*

(21) Application number: **13162680.6**

(22) Date of filing: **04.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **04.05.2009 KR 20090039030**

(62) Document number(s) of the earlier application(s) in accordance with Art. 76 EPC:
**10161901.3 / 2 249 501**



(71) Applicant: **Electronics and Telecommunications Research Institute**
**Daejeon 305-350 (KR)**

(72) Inventors:
- **Kim, Pan-Soo**
  **305-350 Daejeon (KR)**
- **Chang, Dae-Ig**
  **305-350 Daejeon (KR)**
- **Lee, Ho-Jin**
  **305-350 Daejeon (KR)**
- **Cioni, Stefano**
  **40138 Bologna (IT)**
- **Vanelli-Coralli, Alessandro**
  **40136 Bologna (IT)**
- **Corazza, Giovanni E.**
  **40136 Bologna (IT)**

(74) Representative: **Betten & Resch**
**Theatinerstrasse 8**
**80333 München (DE)**



Remarks:
This application was filed on 08-04-2013 as a divisional application to the application mentioned under INID code 62.


(54) **Method and apparatus for transmitting/receiving data using satellite channel**


(57) According to the present invention an apparatus and method for transmitting data using a satellite channel are provided. The apparatus comprises an encoder configured to channel-encode bit data using a code, an interleave configured to interleave the encoded data, and a modulator configured to modulate the interleaved data according to a Continuous Phase Modulation (CPM) scheme using four symbols. The present invention further provides an apparatus and method for receiving data using a satellite channel. The apparatus comprises a demodulator configured to demodulate data transmitted through the satellite channel according to a Continuous Phase Modulation (CPM) scheme using four symbols, a deinterleaver configured to deinterleave the demodulated data, and a decoder configured to decode the deinterleaved data.


FIG. 1

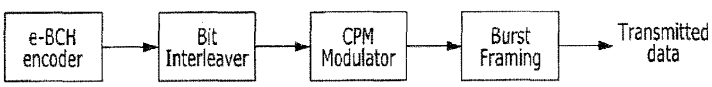


EP 2 615 759 A2

## Description

## BACKGROUND OF THE INVENTION

### Field of the Invention

Exemplary embodiments of the present invention relate to satellite VSAT(Very Small Aperture Terminal) transmission system.

### Description of Related Art

A satellite communication system basically includes a hub (or gateway) configured to operate a communication service, a user terminal used by a service subscriber, and a satellite transponder. However, the conventional satellite communication system has a problem in that the distance between the earth station (e.g. hub station, user terminal, etc.) and the satellite transponder may cause transmission delay and signal power attenuation, besides the cost for launching the satellite transponder in the orbit. The satellite communication system, due to the satellite transponder in the orbit, can provide a large area of service coverage. The satellite communication system also employs a high frequency band, i.e. Ku/Ka band, to provide a broadband communication service, increasing the available bandwidth.

However, the conventional satellite communication system has a problem in that use of the Ku/Ka band for satellite communication requires additional costs for analog devices for up-conversion from the baseband to the Ku/Ka band. The cost problem may make it difficult for the communication service operator to enroll a large number of service subscribers, and development of devices for solving the problem of transmission delay and signal power attenuation may further increase the price of analog devices. The present invention provide transmission scheme using inexpensive analog devices that the data transmission rate doubles whitout extension of bandwidth.

## SUMMARY OF THE INVENTION

A VSAT terminal uses analog part(outdoor unit apparatus). Inferior performance of the analog part is caused by phase noise, nonlinear characteristic of SSPA and inaccuracy characteristic of local oscillator. An embodiment of the present invention is directed to a VSAT terminal using a satellite channel, which shows better data transmitting/receiving performance in an interference communication environment. Another embodiment of the present invention is directed to trnasmission technology, which make it possible to economically manufacture or operate a device used in a satellite communication system. Another embodiment of the present invention is directed to transmission structure, which have an improved data transmission rate without extension of bandwidth.

In accordance with an embodiment of the present invention, a sattellite vsat transmission system, comprising: interleaver structure and transmitting and receiving frame structure for improving efficiency of signal, wherein the satellite vsat transmission system transmit and receive the signal regardless of packet length of the signal.

In accordance with the exemplary embodiments of the present invention, the transmission performance in a carrier instability environment, where frequency error, phase noise, and the like occur, is better than in the case of a conventional DVB-RCS system. That is, the present invention provides better transmission performance in an inferior communication environment so that an inexpensive analog device can be used for the user terminal, for example. This consequently reduces the cost for operation and utilization of the satellite communication system. Furthermore, in accordance with the present invention, frequency is reused using a MIMO system, golden code and a space-time code in a satellite communication system, thereby improving the overall data transmission rate doubles.

## DESCRIPTION OF SPECIFIC EMBODIMENTS

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

Conventional VSAT systems, when CPM-type modulation is used, usually employ the Gaussian Minimum Shift Keying (GMSK) modulation scheme. However, the GMSK modulation scheme has low spectral efficiency, and makes it difficult to transmit a large amount of data. And convolutional code and turbo code is usually used as channel coding scheme for CPM modulation. The present invention provides a novel method for transmitting/receiving data, which has better transmission performance in an inferior communication environment, and which is applicable to a VSAT system.

The present invention, through a return link of a VSAT system, performs channel-encoding using an extended BCH (e-BCH) code, performs interleaving, and transmits the data using a quaternary Continuous Phase Modulation (CPM) scheme using four symbols. The CPM-modulated data is received, and error correction and restoration are performed. That is, in accordance with the present invention, a user terminal in a VSAT system transmits data through e-BCH encoding, interleaving, and CPM modulation, and a hub station in accordance with the present invention receives the data from the user terminal and restores data. In accordance with the present invention, the transmission performance is better in an inferior environment for an analog device compared with conventional DVB-RCS standards. The present invention also transmits data through predetermined interleaving, so that data can be transmitted with no limitation on packet length.

And the present invention, through a return link of a DVB-S2 satellite broadcasting system of DVB-RCS +M standard, comprises technology in relation to transmission structure that the data transmission efficiency is improved twice.

Fig. 1 illustrates a transmission structure of digital part of VSAT system terminal.

Referring to Fig. 1, the user terminal in accordance with the present invention includes an e-BCH encoder, a Bit interleaver, a CPM modulator, and a Burst Framing unit (transmitter). an e-BCH encoder is configured to perform channel encoding by means of an e-BCH block code. The embodiment illustrated in Fig. 1 is described in connection with channel encoding based on a linear systematic code having $k$=51, n=64, and $d_{min}$=6, wherein k refers to the length (bit unit) of information data among input bit data, n refers to the length (bit unit) of a codeword, and $d_{min}$ refers to the minimum distance, specifically Hamming distance. In this case, the code rate in the encoder is 51/64. The encoder is configured to generate a matrix G defined by Equation 1 below, wherein $I$ refers to an identify matrix, and P refers to a parity check matrix. The matrix G generated by I and P is a $k$ by n matrix. The parity check matrix is given in Table 1 below. The matrix G generated by the encoder (Generating Matrix) is used to generate a codeword.

$$\mathbf{G}_{k \times n}^{\text{e-BCH}} = \left[\mathbf{I}_{k \times k} \mid \mathbf{P}_{k \times (n-k)}\right] \qquad \text{Eq. 1}$$

The encoder is configured to divide the input data length $K$ bits by $N_b$ of $k_{ahortened}$ bits in order to have the target code rate $R_{target}$ and the same error correction ability for each block, as defined by Equation 2 below. That is, the encoder splits the input data to encode it into a code having $k$=51 and $n$=64. Therefore, the target code rate $R_{target}$ becomes smaller than the code rate ($k/n$) of e-BCH. The target code rate $R_{target}$ may be set by the operator of the satellite communication system.

Table 1

| | | | | | | | | | | | | |
|---|---|---|---|---|---|---|---|---|---|---|---|---|
| 1 | 0 | 0 | 1 | 1 | 1 | 1 | 0 | 1 | 0 | 1 | 0 | 1 |
| 0 | 1 | 0 | 0 | 1 | 1 | 1 | 0 | 0 | 1 | 0 | 1 | 1 |
| 1 | 0 | 1 | 1 | 1 | 0 | 1 | 1 | 1 | 0 | 0 | 0 | 0 |
| 0 | 1 | 0 | 1 | 1 | 1 | 0 | 1 | 1 | 1 | 0 | 0 | 0 |
| 0 | 0 | 1 | 0 | 1 | 1 | 1 | 0 | 1 | 1 | 1 | 0 | 0 |
| 0 | 0 | 0 | 1 | 0 | 1 | 1 | 1 | 0 | 1 | 1 | 1 | 0 |
| 1 | 0 | 0 | 1 | 0 | 1 | 1 | 1 | 0 | 0 | 0 | 1 | 1 |
| 1 | 1 | 0 | 1 | 0 | 1 | 1 | 1 | 0 | 0 | 1 | 0 | 0 |
| 0 | 1 | 1 | 0 | 1 | 0 | 1 | 1 | 1 | 0 | 0 | 1 | 0 |
| 1 | 0 | 1 | 0 | 1 | 0 | 0 | 1 | 0 | 1 | 1 | 0 | 1 |
| 0 | 1 | 0 | 1 | 0 | 1 | 0 | 0 | 1 | 0 | 1 | 1 | 1 |
| 1 | 0 | 1 | 1 | 0 | 1 | 1 | 0 | 1 | 1 | 1 | 1 | 0 |
| 1 | 1 | 0 | 0 | 0 | 1 | 1 | 1 | 1 | 1 | 0 | 1 | 1 |
| 1 | 1 | 1 | 1 | 1 | 1 | 1 | 1 | 0 | 1 | 0 | 0 | 0 |
| 0 | 1 | 1 | 1 | 1 | 1 | 1 | 1 | 1 | 0 | 1 | 0 | 0 |
| 0 | 0 | 1 | 1 | 1 | 1 | 1 | 1 | 1 | 1 | 0 | 1 | 0 |

(continued)

| | | | | | | | | | | | | |
|---|---|---|---|---|---|---|---|---|---|---|---|---|
| 1 | 0 | 0 | 0 | 0 | 0 | 1 | 1 | 0 | 1 | 0 | 0 | 1 |
| 0 | 1 | 0 | 0 | 0 | 0 | 0 | 1 | 1 | 0 | 1 | 0 | 1 |
| 0 | 0 | 1 | 0 | 0 | 0 | 0 | 0 | 1 | 1 | 0 | 1 | 1 |
| 1 | 0 | 0 | 0 | 1 | 1 | 0 | 0 | 1 | 1 | 0 | 0 | 0 |
| 0 | 1 | 0 | 0 | 0 | 1 | 1 | 0 | 0 | 1 | 1 | 0 | 0 |
| 0 | 0 | 1 | 0 | 0 | 0 | 1 | 1 | 0 | 0 | 1 | 1 | 0 |
| 1 | 0 | 0 | 0 | 1 | 1 | 0 | 1 | 0 | 0 | 1 | 1 | 1 |
| 1 | 1 | 0 | 1 | 1 | 0 | 1 | 0 | 0 | 0 | 1 | 1 | 0 |
| 1 | 1 | 1 | 1 | 0 | 0 | 0 | 1 | 1 | 0 | 1 | 1 | 1 |
| 1 | 1 | 1 | 0 | 0 | 1 | 0 | 0 | 0 | 1 | 1 | 1 | 0 |
| 1 | 1 | 1 | 0 | 1 | 1 | 1 | 0 | 1 | 0 | 0 | 1 | 1 |
| 1 | 1 | 1 | 0 | 1 | 0 | 1 | 1 | 1 | 1 | 1 | 0 | 0 |
| 0 | 1 | 1 | 1 | 0 | 1 | 0 | 1 | 1 | 1 | 1 | 1 | 0 |
| 1 | 0 | 1 | 0 | 0 | 1 | 1 | 0 | 0 | 1 | 0 | 1 | 1 |
| 1 | 1 | 0 | 0 | 1 | 1 | 1 | 1 | 1 | 0 | 0 | 0 | 0 |
| 0 | 1 | 1 | 0 | 0 | 1 | 1 | 1 | 1 | 1 | 0 | 0 | 0 |
| 0 | 0 | 1 | 1 | 0 | 0 | 1 | 1 | 1 | 1 | 1 | 0 | 0 |
| 0 | 0 | 0 | 1 | 1 | 0 | 0 | 1 | 1 | 1 | 1 | 1 | 0 |
| 1 | 0 | 0 | 1 | 0 | 0 | 0 | 0 | 0 | 1 | 0 | 1 | 1 |
| 1 | 1 | 0 | 1 | 0 | 1 | 0 | 0 | 1 | 0 | 0 | 0 | 0 |
| 0 | 1 | 1 | 0 | 1 | 0 | 1 | 0 | 0 | 1 | 0 | 0 | 0 |
| 0 | 0 | 1 | 1 | 0 | 1 | 0 | 1 | 0 | 0 | 1 | 0 | 0 |
| 0 | 0 | 0 | 1 | 1 | 0 | 1 | 0 | 1 | 0 | 0 | 1 | 0 |
| 1 | 0 | 0 | 1 | 0 | 0 | 0 | 1 | 1 | 1 | 1 | 0 | 1 |
| 0 | 1 | 0 | 0 | 1 | 0 | 0 | 0 | 1 | 1 | 1 | 1 | 1 |
| 1 | 0 | 1 | 1 | 1 | 0 | 0 | 0 | 1 | 1 | 0 | 1 | 0 |
| 1 | 1 | 0 | 0 | 0 | 0 | 0 | 0 | 1 | 1 | 0 | 0 | 1 |
| 0 | 1 | 1 | 0 | 0 | 0 | 0 | 0 | 0 | 1 | 1 | 0 | 1 |
| 0 | 0 | 1 | 1 | 0 | 0 | 0 | 0 | 0 | 0 | 1 | 1 | 1 |
| 1 | 0 | 0 | 0 | 0 | 1 | 0 | 0 | 1 | 0 | 1 | 1 | 0 |
| 1 | 1 | 0 | 1 | 1 | 1 | 1 | 0 | 1 | 1 | 1 | 1 | 1 |
| 1 | 1 | 1 | 1 | 0 | 0 | 1 | 1 | 1 | 1 | 0 | 1 | 0 |
| 1 | 1 | 1 | D | 0 | 1 | 0 | 1 | 0 | 1 | 0 | 0 | 1 |
| 0 | 1 | 1 | 1 | 0 | 0 | 1 | 0 | 1 | 0 | 1 | 0 | 1 |
| 0 | 0 | 1 | 1 | 1 | 0 | 0 | 1 | 0 | 1 | 0 | 1 | 1 |

$$N_b = \left\lfloor \frac{K}{n-k} \cdot \left( \frac{1}{R_{target}} - 1 \right) \right\rfloor$$
$$k_{shortened} = \left\lfloor \frac{K}{N_b} \right\rfloor$$
$$q_1 = K - \left( N_b \cdot k_{shortened} \right)$$
$$q_2 = N_b - q_1$$
$$R_{effective} = \frac{K}{K + N_b \cdot (n-k)} = \frac{K}{N} \qquad \text{Eq. 2}$$

In Equation 2, $\lfloor\ \rfloor$ indicates a floor operator, which discards the remainder. The input data length $K$ bit is divided by $N_b$ block. The length of $q_1$ is $k_{shortened}$ + 1, and the length of $q_2$ is $k_{shortened}$. The $R_{effective}$ code rate according to Equation 2 may be slightly different from the target code rate $R_{target}$. In each block divided by $N_b$, zeros are inserted in front of the packet by the encoder having $k$ bits (u=$\lfloor$ 0...0, $b_1 b_2 \ldots b_{k_{shortened}}\rfloor$). The encoder is configured to generate the final codeword c defined by Equation 3 below using the generating matrix G according to Equation 1 and the block divided by $N_b$, into which zeros have been inserted.

$$\mathbf{c}_{1\times n} = \mathbf{u}_{1\times k} \cdot \mathbf{G}_{k\times n}^{\text{e-BCH}} \qquad \text{Eq. 3}$$

The bit interleaver is configured to interleave data encoded by the encoder. The interleaver may perform interleaving according to a S-random interleaving (or spread interleaving) scheme defined by Equation 4 below, in order to change burst error, which exists in encoded data, into random error.

$$j = (i \times P_1 + P_2) \bmod N \qquad i = 0,1,2,\ldots,N-1 \qquad \text{Eq. 4}$$

In Equation 4, N refers to the block length divided by $N_b$, and $P_1$ and $P_2$ are 1103 and 251, respectively.

The CPM modulator is configured to modulate data, which has been interleaved by the interleaver, through a CPM scheme exhibiting phase continuity characteristics. A method of modulation according to the CMP scheme is defined by Equation 5 below.

$$s(t,\alpha) = \sqrt{\frac{2E}{T}} \cos\left[2\pi f_0 t + \varphi(t,\alpha) + \varphi_0\right] \qquad \text{Eq. 5}$$

In Equation 5, E refers to symbol energy, T refers to symbol time, $f_0$ refers to carrier frequency, and $\varphi_0$ refers to arbitrary fixed phase shift. The $\varphi_0$ may be set to zero for synchronous demodulation. In general, data information is loaded onto the phase value of $\varphi(t, \alpha)$, which is defined by Equation 6 below.

$$\varphi(t,\alpha) = 2\pi h \int_{-\infty}^{t} \sum_{k=-\infty}^{+\infty} \alpha_k g(\tau - kT)\, d\tau \qquad \text{Eq. 6}$$

In Equation 6, $\alpha_k$ refers to an uncorrelated information data symbol sequence having similar probability of occurrence, the value of which is one of {±1, ±3, ±(M-1)}, and M refers to constellation cardinality. In accordance with an embodiment of the present invention, *M*=4, and as described above, the modulator 105 performs modulation in a CPM scheme using four symbols. The CPM scheme having M=4 will hereinafter be referred to as a quaternary CPM scheme. When M=4, $\alpha_k$ can be gray-mapped onto four symbols as shown in Table 2 below.

Table 2

| Bits | Symbol |
|---|---|
| 00 | -3 |
| 01 | -1 |
| 11 | 1 |
| 10 | 3 |

In Equation 6 below, h refers to modulation index. A general CPM scheme will now be described. Modulation according to a CPM scheme requires that the frequency *pulse* g(t) in Equation 6 satisfy the condition defined by Equation 7 below.

$$\begin{cases} g(t) = 0, & t \le 0 \text{ or } t \ge LT \\ g(t) \ne 0, & 0 < t < LT \end{cases} \quad \text{Eq. 7}$$

In Equation 7, L refers to the CPM memory length, and T refers to symbol interval.
A phase response to a baseband is defined by Equation 8 below.

$$q(t) = \int_{-\infty}^{t} g(\tau)d\tau \quad \text{Eq. 8}$$

And function *q(t)* in Equation 8 must satisfy the condition defined by Equation 9 below.

$$q(t) = \begin{cases} 0, & t \le 0 \\ \frac{1}{2}, & t \ge LT \end{cases} \quad \text{Eq. 9}$$

Using Equations 7 to 9, Equation 6 can be expressed without integration operation, as defined by Equation 10 below.

$$\varphi(t,\alpha) = 2\pi h \sum_{k=-\infty}^{+\infty} \alpha_k q(\tau - kT) \quad \text{Eq. 10}$$

phase impulse shape *g(t)* according to the quaternary CPM scheme can be expressed in terms of a Raised-Cosine (RC) function as defined by Equation 11.

$$g(t) = \begin{cases} \frac{1}{2LT}\left[1 - \cos\left(\frac{2\pi t}{LT}\right)\right], & 0 \le t \le LT \\ 0, & \text{elsewhere} \end{cases} \quad \text{Eq. 11}$$

Using Equation 12, Equation 10 can be rewritten into Equation 13.

$$q(t) = \frac{t}{2LT} - \frac{1}{4\pi}\sin\left(\frac{2\pi t}{LT}\right) \quad 0 \le t \le LT \qquad \text{Eq. 12}$$

$$\varphi(t,\alpha_n) = \pi h \sum_{k=0}^{n-L} \alpha_k + 2\pi h \sum_{k=n-L+1}^{n} \alpha_k q(t-kT) = \theta_n + \theta(t,\alpha_n) \qquad \text{Eq. 13}$$

In Equation 13, $\theta_n$ refers to a phase state at time $n$-L, $\theta(t,\alpha_n)$ refers to a partial response from time n-L to time $n$, and $L$>1 in this case. In other words, a partial response signal $\varphi(t,\alpha_n,)$ in an arbitrary symbol interval n is defined by the current data symbol $\alpha_n$, and, at symbol n-L, defined as a correlative state vector ($\alpha_{n-1}$, $\alpha_{n-2}$,..., $\alpha_{n-L+1}$) and phase state $\theta_n$. When $L$=1, the correlative state vector becomes an empty vector. Assuming that $h$ refers to a ratio between prime numbers, i.e. the modulation index is expressed as a ratio to a prime number, $h=m/p$, and every possible phase state value, $\theta_n$, can be expressed by Equation 14 below.

$$\theta_S = \left\{0, \frac{\pi m}{p}, \frac{2\pi m}{p}, \ldots, \frac{(p-1)\pi m}{p}\right\} \quad (\text{even } m, p \text{ - > phase state value})$$
$$\theta_S = \left\{0, \frac{\pi m}{p}, \frac{2\pi m}{p}, \ldots, \frac{(2p-1)\pi m}{p}\right\} \quad (\text{odd } m, 2p \text{ - > phase state value}) \qquad \text{Eq. 14}$$

CPM modulation can be expressed as a time-variant trellis having a modulation state defined by vector $\delta_n$= ($\theta_n$, $\alpha_{n-1}$, $\alpha_{n-2}$,..., $\alpha_{n-L+1}$). The correlative state is influenced by the last $n$-$L$+$1$ data symbol, and the phase state transition is calculated by Equation 15 below.

$$\theta_{n+1} = \theta_n + \pi h \alpha_{n-L+1} \qquad \text{Eq. 15}$$

Due to memory limitation, detection of a CPM signal requires a decoder-based trellis. The CPM state number, $N_s$, is calculated by Equation 16 below.

$$N_S = \begin{cases} pM^{L-1} & \text{, for even } m \\ 2pM^{L-1} & \text{, for odd } m \end{cases} \qquad \text{Eq. 16}$$

A burst frame transmitted through a return link in a conventional DVB-RCS system has a structure including a preamble $N_{pre}$ ($0<N_{pre}<256$) and information data, but a burst frame in accordance with the present invention includes, as illustrated in Fig. 2, a preamble $N_{pre}$, information data $N_{dist}$, wasted symbols, a midamble $N_{mid}$, and remaining data. The information data and remaining data may vary depending on the size of input data. The wasted symbols are inserted between the preamble and the midamble so that the receiving side can change the modulation state into a predetermined known state. More specifically, when a CPM signal is transmitted, the receiving side, even when knowing the $i^{th}$ transmitted symbol, needs to know the CPM signal in time interval $[iT; kT+T]$. Considering this, the user terminal transmits wasted symbols to the receiving side (hub station) so that the receiving side can change the modulation state into a predetermined known state. The amount of wasted symbols, also referred to as a state-forcing sequence, depends on the CPM format regardless of whether useful information is transmitted or symbols for channel estimation are transmitted. The length of wasted symbols is determined by $L$-1+$\lceil p/M \rceil$, wherein $\lceil x \rceil$ refers to an integer smaller than x.

Meanwhile, since the band of CPM has an infinite value, an effective frequency band capable of isolating an adjacent channel user is important. In addition, selection of a power ratio for defining the effective frequency band is also important. In accordance with an embodiment of the present invention, the power ratio for defining the effective frequency band is 99%, and the relationship between spectral efficiency, target code rate $R_{target}$, CPM scheme, and effective frequency band (BW99%) is given in Table 3 below.

Table 3

| Spectral Efficiency | e-BCH $R_{target}$ | CPM Scheme | BW99% [normalized to T] |
|---|---|---|---|
| 0.75 bit/s/Hz | 0.7053 | Q2RC, $h$=3/7 | 1.8773 |
| 1.00 bit/s/Hz | 0.7162 | Q2RC, $h$=2/7 | 1.3772 |
| 1.25 bit/s/Hz | 0.7048 | Q3RC, $h$=2/7 | 1.1193 |
| 1.50 bit/s/Hz | 0.7689 | Q3RC, $h$=1/4 | 1.0151 |

Figs. 5 and 6 show general Amplitude Modulation (AM)-AM characteristics and AM-Phase Modulation (PM) characteristics of a SSPA(Solid-State Power Amplifier), respectively. Input frequency error as TRF data is [-4k, 4kHz]. Fig. 4 illustrates transmission/reception cahin and simulator structure for e-BCH+CPM transmission. In Fig. 4, CPM filtering is performed for reception signal and symbol timing synchronization is performed for reception signal. Rife and Boorstyn (R&B) algorithm of data-aieded scheme is applied to Fig. 4. And the reception signal is defined by Equation 17 below. In Equation 17, n refers to an unknown frequency mismatch value, $\theta(t)$ refers to a carrier phase-noise process value. The frequency estimator is configured to estimate frequency through the following conventional frequency estimation process.

(1) Correlation functions

The frequency estimator obtains correlation defined by Equation 17 below using known data in the preamble and midamble of a received signal, i.e. signal transmitted from the user terminal.

$$z_n^{pre} = \int_{nT}^{nT+T} r(t)s^*(t,\alpha)dt \qquad n = 0,1,\ldots N_{pre}-1$$

$$z_n^{mid} = \int_{(n+N_{pre}+D)T}^{(n+N_{pre}+D)T+T} r(t)s^*(t,\alpha)dt \qquad n = 0,1,\ldots N_{mid}-1 \qquad \text{Eq. 17}$$

In Equation 17, parameter D corresponds to a wasted symbol considered by $N_{dist}$.

(2) FFT computation

The frequency estimator performs Fast Fourier Transform (FFT), as defined by Equation 18 below.

In Equation 18, p refers to a pruning factor of Rife and Boorstyn (R&B) algorithm. Zeros are inserted into a signal inputted to the frequency estimator, and the total length of symbols used for frequency estimation is $\rho(N_{pre}+D+N_{mid})$.

$$Z_k^{pre} = \sum_{n=0}^{\rho(N_{pre}+D+N_{mid})-1} z_n^{pre} e^{-j2\pi\frac{kn}{\rho(N_{pre}+D+N_{mid})}}$$

$$Z_k^{mid} = \sum_{n=0}^{\rho(N_{pre}+D+N_{mid})-1} z_n^{mid} e^{-j2\pi\frac{kn}{\rho(N_{pre}+D+N_{mid})}} \qquad \text{Eq. 18}$$

(3) Sequence combination

The frequency estimator combines the two frequency domain-related sequences, which result from Equation 18, as defined by Equation 19 below.

$$Z_k = Z_k^{pre} + Z_k^{mid} e^{-j2\pi \frac{k(N_{pre}+D)}{\rho(N_{pre}+D+N_{mid})}} \qquad k = 0,1,\ldots(N_{pre}+D+N_{mid})-1 \quad \text{Eq. 19}$$

(4) Search for the maximum value

The frequency estimator obtains $\hat{k}$, which indicates maximum value $|Z_k|^2$, using the result of Equation 19, and obtains a frequency mismatch value using Equation 20 below.

$$\hat{v} = \frac{\hat{k}}{\rho(N_{pre} + D + N_{mid})T} \quad \text{Eq. 20}$$

Meanwhile, the complex envelope of the signal received by the hub station, i.e. CPM-modulated signal, may be expressed, for symbol detection, according to Equation 21 below.

$$s(t,\alpha) = \sum_{k=0}^{F-1} \sum_n \beta_{k,n} p_k(t-nT) \quad \text{Eq. 21}$$

In Equation 21, $F=(M-1)*2^{(L-1)logM}$, which indicates the number of modulated pulses $p_k(t)$, and $\beta_{k,n}$ refers to a pseudo-symbol. The pulse $p_k(t)$ and symbol $\beta_{k,n}$ are major parameters of the CPM function. In order to reduce the complexity of the demodulator, the condition of $S<F$ may be used for linear filtering by the filter, wherein $S=(M-1)M^{L-1}$, $F=(M-1)*2^{(L-1)logM}$. Among the first four symbols (M=4) , a CPM modulation-based pulse corresponding to '-1' is referred to as a principal component. If L<3, it is sufficient to gather energy necessary for transmission. If L≥3, the value of F and the length of linear filter become larger, making it necessary to increase the length of modulated pulses $p_k(t)$ .

In general, CPM modulation is performed according to a Maximum-Likelihood Sequence Detection (MLSD) based on consideration of the intrinsic memory of CPM signals. However, the demapper in accordance with an embodiment of the present invention applies BCJR algorithm and performs demodulation, assuming coherent demodulation, in order to remove carrier phase error. According to the BCJR algorithm, a probability value is expressed as data through soft decision during data detection. When phase noise is considered, phase synchronization technology by the demapper may be combined with the BCJR algorithm through Bayesian technique. In this case, actually implementable $\{2\pi i / R\}_{i=o}^{R-1}$ is obtained by dividing the channel phase estimation value in the phase value by a discrete value. In the formula, $R$ refers to a value determining the scale of state of a phase value corresponding to 2pi, and has a value of 6p in accordance with an embodiment of the present invention, and p refers to denominator of CPM modulation index h.

The decoder decodes a signal, which has been channel-encoded by an e-BCH code, using Chase-Pyndiah algorithm. when a e-BCH code(51, 64) signal channel-encoded is decoded using Chase-Pyndiah algorithm, the complexity of encoder in terms of logic gate is comparable to or smaller than when 32-states Convolutional Code (CC) is used for encoding. The number of times is set to a maximum of 30 times between CPM modulation and e-BCH decoder.

Fig. 7 shows Packet Error Rate (PER) performance through an AWGN channel when ATM-SAC packet size is 456 bits and spectral efficiency is 0.75 bit/s/Hz. In Fig. 7, the lower the PER and Energy per Symbol per Noise Power Spectral Density (Es/NO) are, the better the performance is. It is clear from Fig. 7 that, when the satellite communication system 400 includes no analog device (SSPA) and is in no carrier instability environment, the conventional DVB-RCS-based scheme, i.e. RCS 1st GEN exhibits the best PER performance. Furthermore, combined use of a conventional turbo code with a CPM scheme deteriorates performance, and the result in accordance with the present invention has inferior performance than the conventional DVB-RCS-based scheme. Fig. 8 shows PER performance through an AWGN channel when 1MPEG packet size is 1504 bits and spectral efficiency is 0.75 bit/s/Hz. The result shown in Fig. 8 is similar to that shown in Fig. 7.

Figs. 9 and 10 show PER performance and necessary Es/N0 of a satellite communication system 400 based on spectral efficiency described in Table 3.

Specifically, Figs. 9 shows PER performance in accordance with spectral efficiency through an AWGN channel when 1MPEG packet size is 1504 bits. Figs. 10 shows PER performance in accordance with spectral efficiency through an AWGN channel when ATM-SAC packet size is 456 bits.

Fig. 11 shows a comparison of PER performance between the present invention and conventional DVB-RCS systemin phase error and phase noise environment. Output Back off power is 0.5dB. The symbol rate and data rate values in terms of spectral efficiency is as below.

- RCS 1st generation: 380 kBaud and equivalently 380 kbit/s (1/2-QPSK);
- e-BCH+CPM, Eff. 0.75: 273 kBaud and equivalently 380 kbit/s;
- e-BCH+CPM, Eff. 1.0: 372 kBaud and equivalently 520 kbit/s;
- e-BCH+CPM, Eff. 1.25: 458 kBaud and equivalently 640 kbit/s;
- e-BCH+CPM, Eff. 1.5: 506 kBaud and equivalently 768 kbit/s;

In Fig. 11, the preamble length of a conventional DVB-RCS burst frame is 48, and a burst frame in accordance with the present invention has a structure of: $N_{pre}$=$N_{mid}$=32, $N_{dist}$=30. It is clear from Fig. 11 that, in a carrier instability environment, the method for transmitting/receiving data in accordance with the present invention exhibits better PER performance than the conventional DVB-RCS scheme. In accordance with the present invention, degradation caused by frequency and phase noise is 0.2-0.4 dB, which means better performance than conventional DVB-RCS.

Figs. 12 shows PER performance of CPM modulation in carrier instability environment and AWGN channel in accordance with spectral efficiency when 1ATM-SAC packet size is 456 bits. Figs, 13 shows PER performance of CPM modulation in carrier instability environment and AWGN channel in accordance with spectral efficiency when 1MPEG packet size is 1504 bits.

Fig. 14 illustrates a SCPC connection scheme for improving data transmission rate in DVB-S2 transmission structure. The present invention employs a Multi-Input Multi-Output (MIMO) system and a space-time code to increase the data transmission rate. This construction in accordance with the present invention employs a MIMO system and a golden code as a space-time code so that, through polarization reuse, the link throughput doubles. The present invention exhibits better performance in a Line-Of-Sight (LOS) environment where transmitting and receiving antennas face each other. The golden code can be defined by Equation 22 below.

$$X=\begin{bmatrix} x_1 & x_2 \\ x_3 & x_4 \end{bmatrix}=\frac{1}{\sqrt{5}}\begin{bmatrix} \alpha(S_1+\theta S_2) & \alpha(S_3+\theta S_4) \\ i\sigma(\alpha)(S_3+\sigma(\theta)S_4) & \sigma(\alpha)(S_1+\sigma(\theta)S_2) \end{bmatrix}$$

Eq. 22

In Equation 22, $S_1$, $S_2$, $S_3$, and $S_4$ refer to complex-valued information symbols, $\theta$ refers to a golden number

( $\theta = \frac{1+\sqrt{5}}{2} \approx 1.618$ ) wherein, $\sigma(\theta) = 1-\theta = \frac{1-\sqrt{5}}{2}$ , $\alpha=1+i\sigma(\theta)$ and $\sigma(\alpha)=1+i\theta$.

BRIEF DESCRIPTION OF THE DRAWINGS

Fig. 1 illustrates a transmission structure of digital part of VSAT system terminal.

Fig. 2 illustrates a burst framing structure.

Fig. 3 illustrates a reception structure of digital part of VSAT system of gateway.

Fig. 4 illustrates transmission/reception cahin and simulator structure for e-BCH+CPM transmission.

Figs. 5 shows general AM(Amplitude Modulation)-AM characteristics of a SSPA.

Fig. 6 shows general AM-PM (Phase Modulation) characteristics of a SSPA.

Fig. 7 shows PER performance through an AWGN channel when ATM-SAC packet size is 456 bits and spectral efficiency is 0.75 bit/s/Hz.

Fig. 8 shows PER performance through an AWGN channel when 1MPEG packet size is 1504 bits and spectral efficiency is 0.75 bit/s/Hz.

Figs. 9 shows PER performance in accordance with spectral efficiency through an AWGN channel when 1MPEG packet size is 1504 bits.

Fig. 10 shows PER performance in accordance with spectral efficiency through an AWGN channel when ATM-SAC packet size is 456 bits.

Fig. 11 shows a comparison of PER performance between the present invention and conventional DVB-RCS systemin phase error and phase noise environment.

Figs. 12 shows PER performance of CPM modulation in carrier instability environment and AWGN channel in accordance with spectral efficiency when 1ATM-SAC packet size is 456 bits.

Fig. 13 shows PER performance of CPM modulation in carrier instability environment and AWGN channel in accordance with spectral efficiency when 1MPEG packet size is 1504 bits.

Fig. 14 illustrates a transmission structure in accordance with Polarization Reuse and Golden Code.

## Claims

**1.** An apparatus for transmitting data using a satellite channel, comprising:

an encoder configured to channel-encode bit data using a code;
an interleave configured to interleave the encoded data; and
a modulator configured to modulate the interleaved data according to a Continuous Phase Modulation (CPM) scheme using four symbols.

**2.** The apparatus of claim 1, wherein the four symbols are -3, -1, 1, and 3, and the four symbols are mapped onto 00, 01, 11, and 10 bits, respectively.

**3.** The apparatus of claim 1 or 2, further comprising a transmitter configured to generate a burst frame including the modulated data, and transmit the burst frame.

**4.** The apparatus of claim 3, wherein the burst frame includes a preamble interval, a first data interval, a symbol interval, a midamble interval, and a second data interval.

**5.** An apparatus for receiving data using a satellite channel, comprising:

a demodulator configured to demodulate data transmitted through the satellite channel according to a Continuous Phase Modulation (CPM) scheme using four symbols;
a deinterleaver configured to deinterleave the demodulated data; and
a decoder configured to decode the deinterleaved data.

**6.** The apparatus of claim 5, wherein the four symbols are -3, -1, 1, and 3, and the four symbols are mapped onto 00, 01, 11, and 10 bits, respectively.

**7.** The apparatus of claim 5 or 6, wherein the data transmitted through the satellite channel are transmitted as a burst frame according to the CPM scheme using the four symbols.

**8.** The apparatus of claim 7, wherein the burst frame includes a preamble interval, a first data interval, a symbol interval, a midamble interval, and a second data interval.

**9.** A method for transmitting data using a satellite channel, comprising:

channel-encoding bit data using a code;
interleaving the encoded data; and
modulating the interleaved data according to a Continuous Phase Modulation (CPM) scheme using four symbols.

**10.** The method of claim 9, wherein the four symbols are -3, -1, 1, and 3, and the four symbols are mapped onto 00, 01, 11, and 10 bits, respectively.

**11.** The method of claim 9 or 10, further comprising:

generating a burst frame including the modulated data; and
transmitting the burst frame.

**12.** A method for receiving data using a satellite channel, comprising:

a demodulator configured to demodulate data transmitted through the satellite channel according to a Continuous Phase Modulation (CPM) scheme using four symbols;
deinterleaving the demodulated data; and
decoding the deinterleaved data.

**13.** The method of claim 12, wherein the four symbols are -3, -1, 1, and 3, and the four symbols are mapped onto 00, 01, 11, and 10 bits, respectively.

**14.** The method of claim 12 or 13, wherein the data transmitted through the satellite channel are transmitted as a burst frame according to the CPM scheme using the four symbols.

**15.** The method of claim 11 or 15, wherein the burst frame includes a preamble interval, a first data interval, a symbol interval, a midamble interval, and a second data interval.

FIG. 1

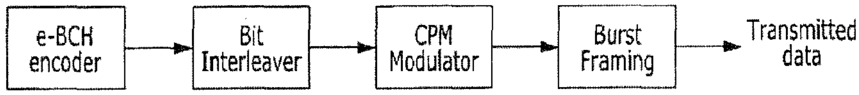
e-BCH encoder
Bit Interleaver
CPM Modulator
Burst Framing
Transmitted data

FIG. 2

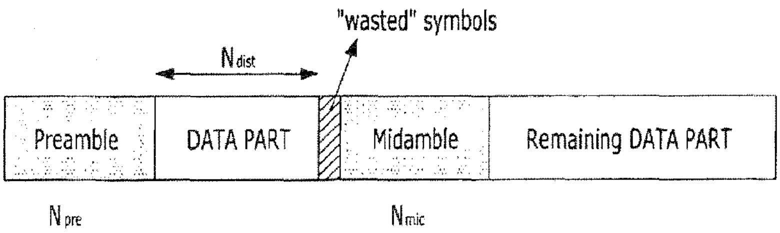
"wasted" symbols
N dist
Preamble
DATA PART
Midamble
Remaining DATA PART
N pre
N mic

FIG. 3

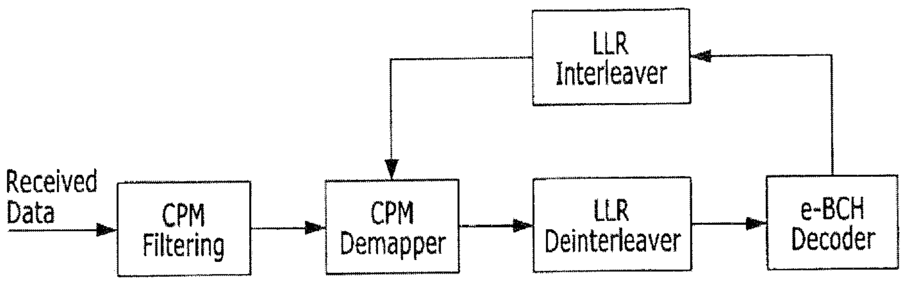
LLR
Interleaver
Received
Data
CPM
Filtering
CPM
Demapper
LLR
Deinterleaver
e-BCH
Decoder

FIG. 4

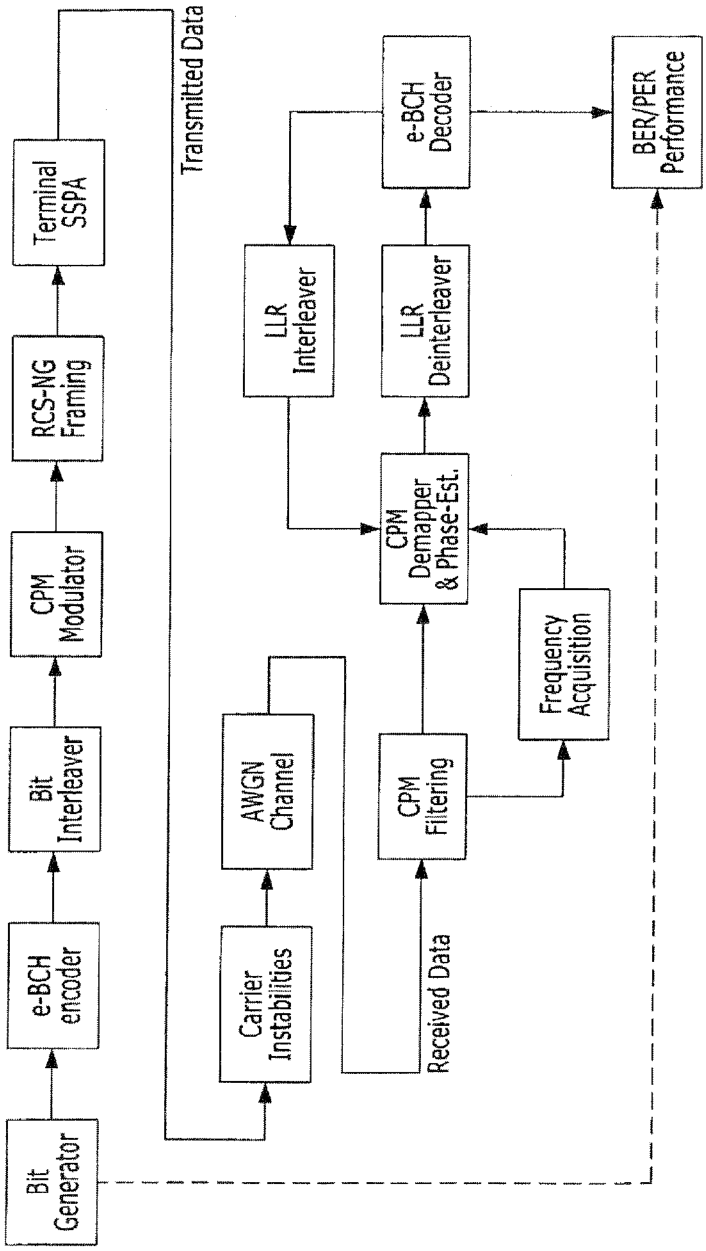
Bit Generator
e-BCH encoder
Bit Interleaver
CPM Modulator
RCS-NG Framing
Terminal SSPA
Transmitted Data
Carrier Instabilities
AWGN Channel
Received Data
CPM Filtering
Frequency Acquisition
CPM Demapper & Phase-Est.
LLR Interleaver
LLR Deinterleaver
e-BCH Decoder
BER/PER Performance

FIG. 5

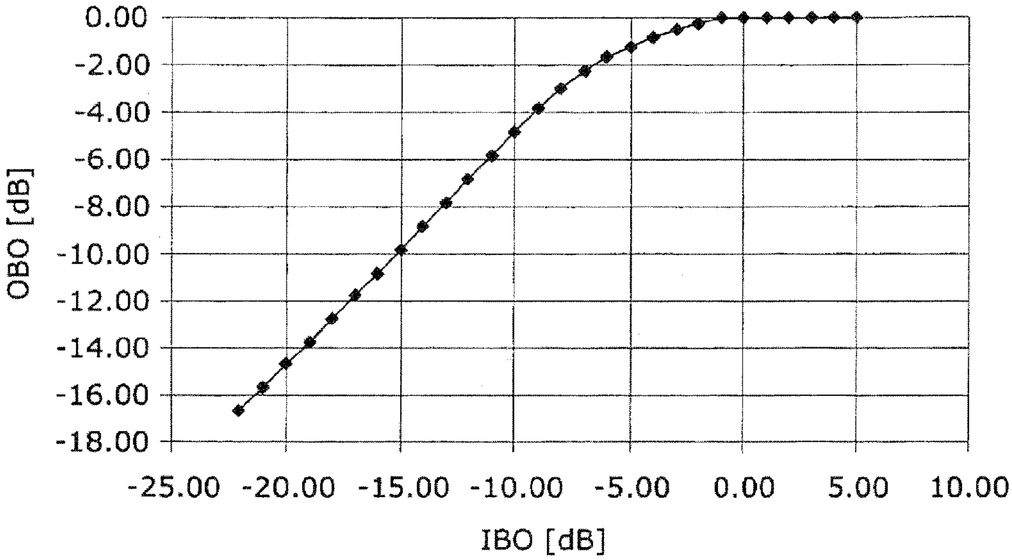
0.00
-2.00
-4.00
-6.00
-8.00
-10.00
-12.00
-14.00
-16.00
-18.00
OBO [dB]
-25.00 -20.00 -15.00 -10.00 -5.00 0.00 5.00 10.00
IBO [dB]

FIG. 6

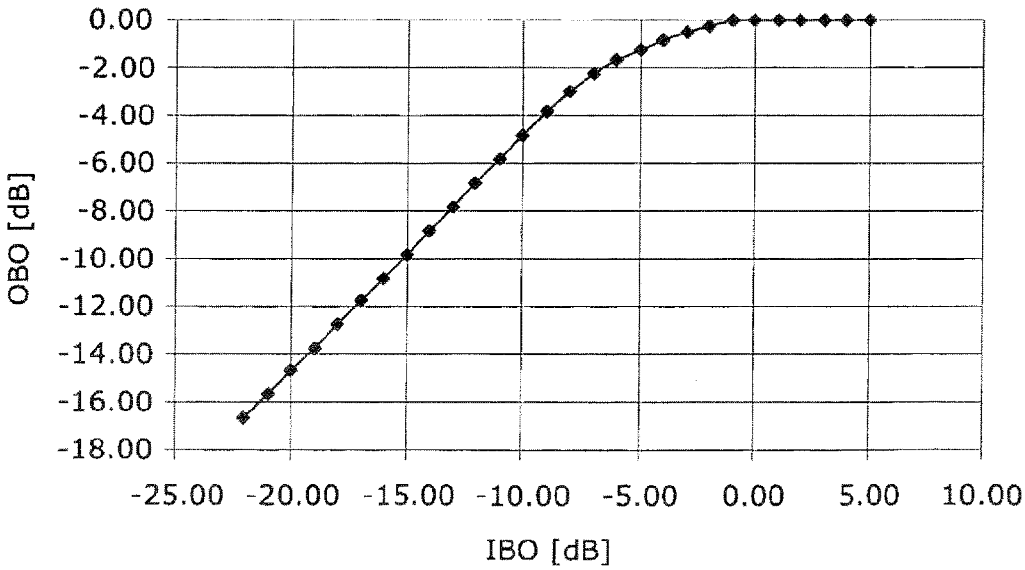
0.00
-2.00
-4.00
-6.00
-8.00
-10.00
-12.00
-14.00
-16.00
-18.00
OBO [dB]
-25.00 -20.00 -15.00 -10.00 -5.00 0.00 5.00 10.00
IBO [dB]

FIG. 7

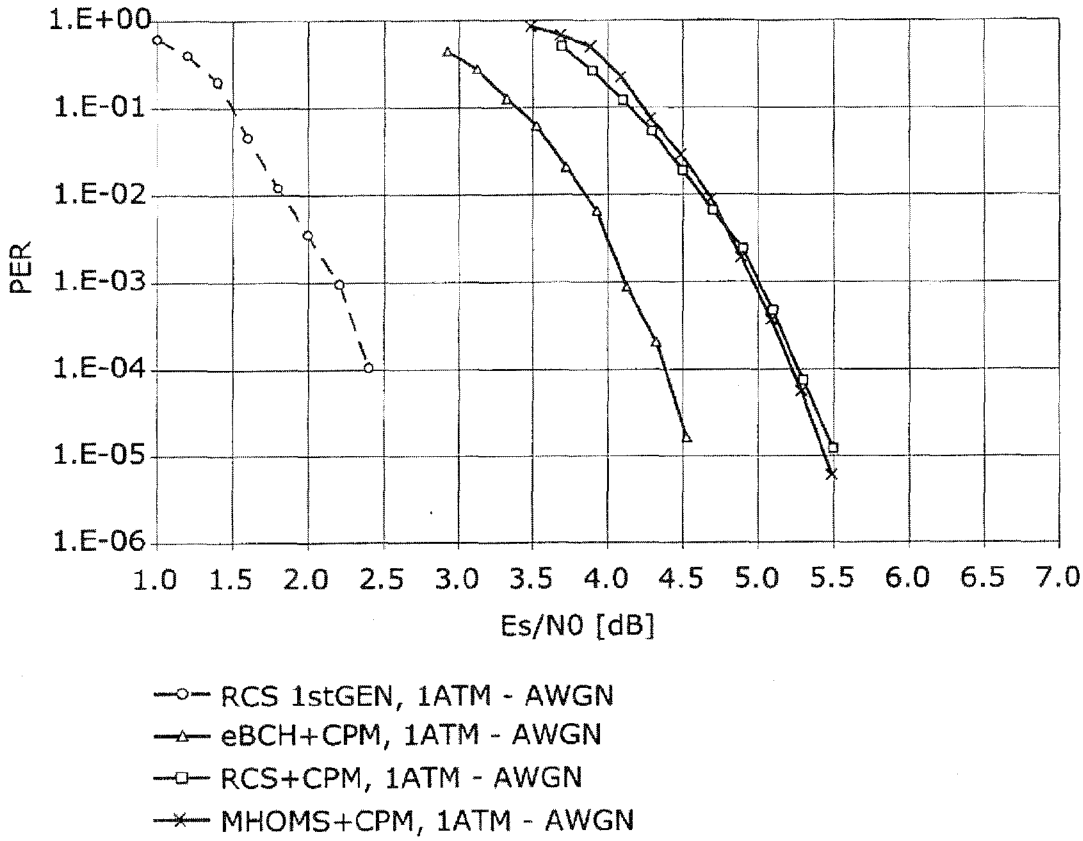
1.E+00
1.E-01
1.E-02
1.E-03
1.E-04
1.E-05
1.E-06
PER
1.0 1.5 2.0 2.5 3.0 3.5 4.0 4.5 5.0 5.5 6.0 6.5 7.0
Es/N0 [dB]
RCS 1stGEN, 1ATM - AWGN
eBCH+CPM, 1ATM - AWGN
RCS+CPM, 1ATM - AWGN
MHOMS+CPM, 1ATM - AWGN

FIG. 8

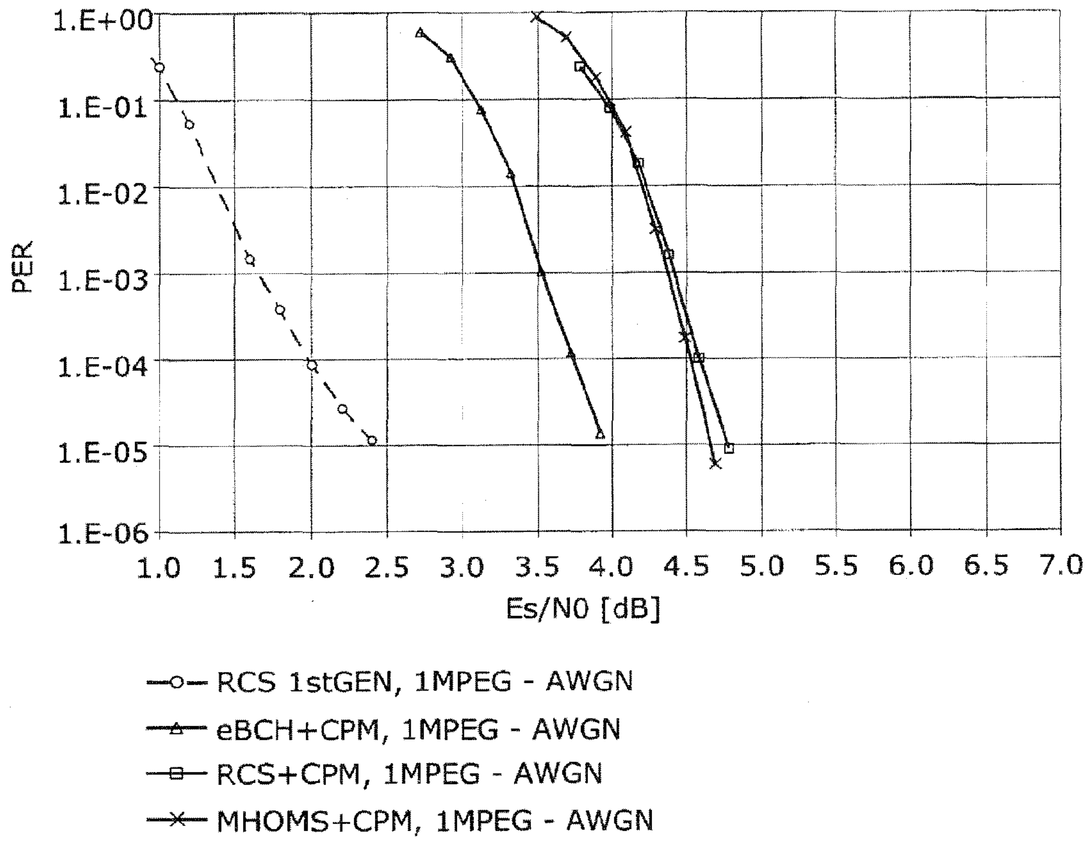
1.E+00
1.E-01
1.E-02
1.E-03
1.E-04
1.E-05
1.E-06
PER
1.0 1.5 2.0 2.5 3.0 3.5 4.0 4.5 5.0 5.5 6.0 6.5 7.0
Es/N0 [dB]
RCS 1stGEN, 1MPEG - AWGN
eBCH+CPM, 1MPEG - AWGN
RCS+CPM, 1MPEG - AWGN
MHOMS+CPM, 1MPEG - AWGN

FIG. 9

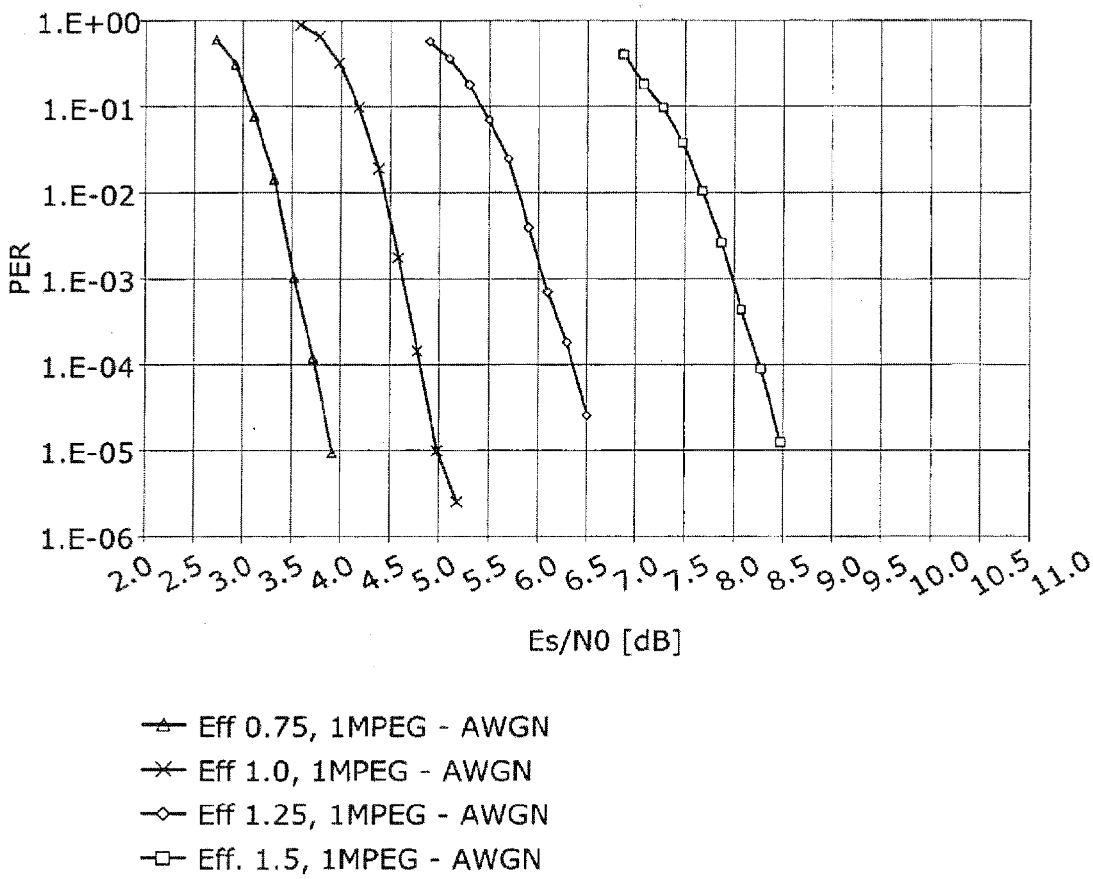
1.E+00
1.E-01
1.E-02
1.E-03
1.E-04
1.E-05
1.E-06
PER
2.0 2.5 3.0 3.5 4.0 4.5 5.0 5.5 6.0 6.5 7.0 7.5 8.0 8.5 9.0 9.5 10.0 10.5 11.0
Es/N0 [dB]
Eff 0.75, 1MPEG - AWGN
Eff 1.0, 1MPEG - AWGN
Eff 1.25, 1MPEG - AWGN
Eff. 1.5, 1MPEG - AWGN

FIG. 10

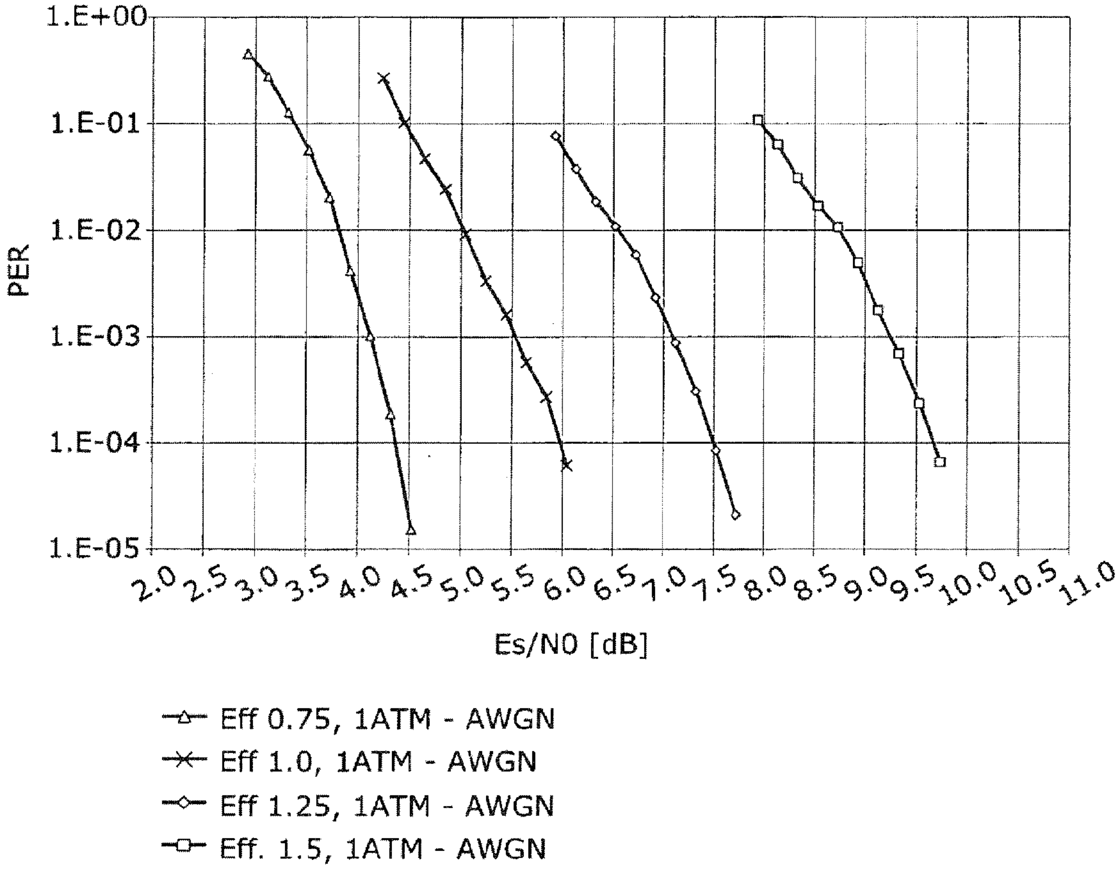
1.E+00
1.E-01
1.E-02
1.E-03
1.E-04
1.E-05
PER
2.0 2.5 3.0 3.5 4.0 4.5 5.0 5.5 6.0 6.5 7.0 7.5 8.0 8.5 9.0 9.5 10.0 10.5 11.0
Es/N0 [dB]
Eff 0.75, 1ATM - AWGN
Eff 1.0, 1ATM - AWGN
Eff 1.25, 1ATM - AWGN
Eff. 1.5, 1ATM - AWGN

FIG. 11

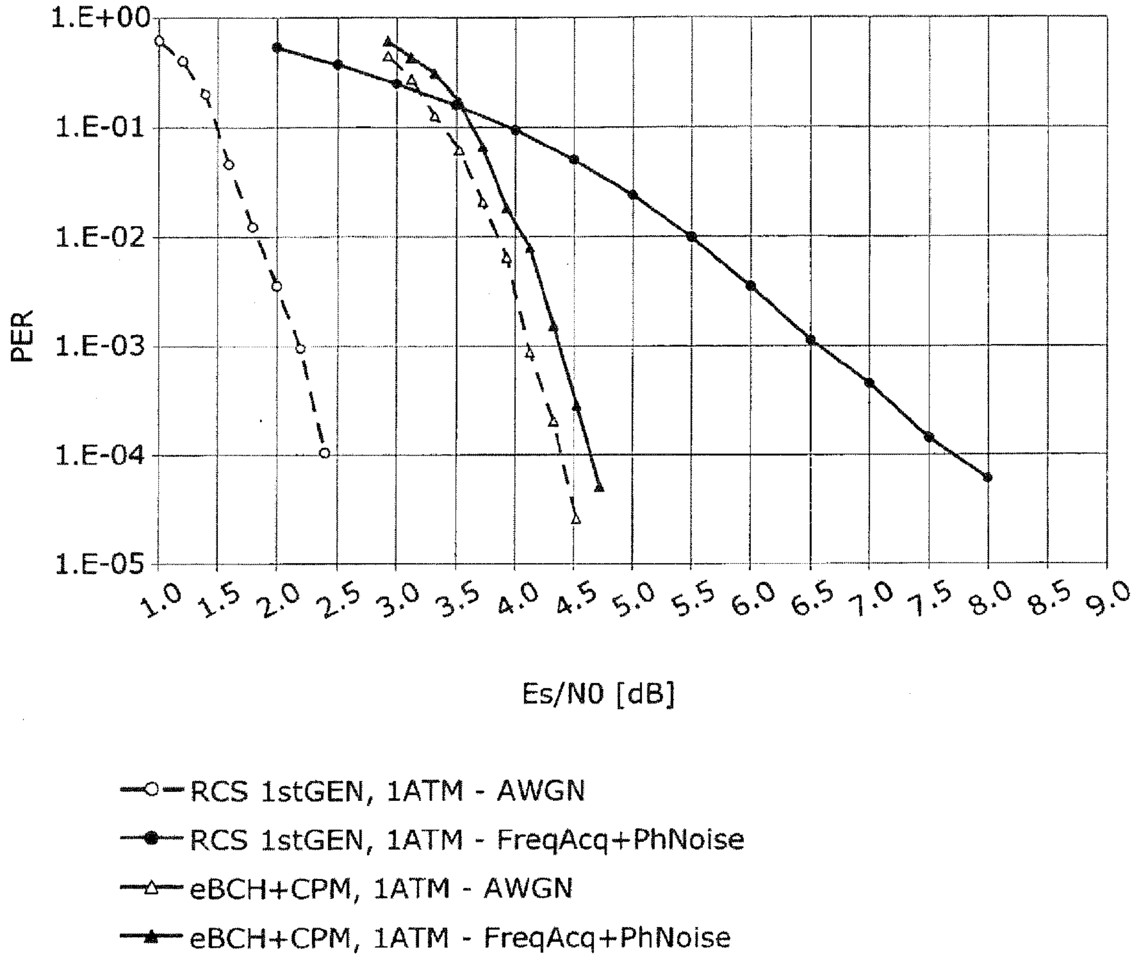
1.E+00
1.E-01
1.E-02
1.E-03
1.E-04
1.E-05
PER
1.0 1.5 2.0 2.5 3.0 3.5 4.0 4.5 5.0 5.5 6.0 6.5 7.0 7.5 8.0 8.5 9.0
Es/N0 [dB]
RCS 1stGEN, 1ATM - AWGN
RCS 1stGEN, 1ATM - FreqAcq+PhNoise
eBCH+CPM, 1ATM - AWGN
eBCH+CPM, 1ATM - FreqAcq+PhNoise

FIG. 12

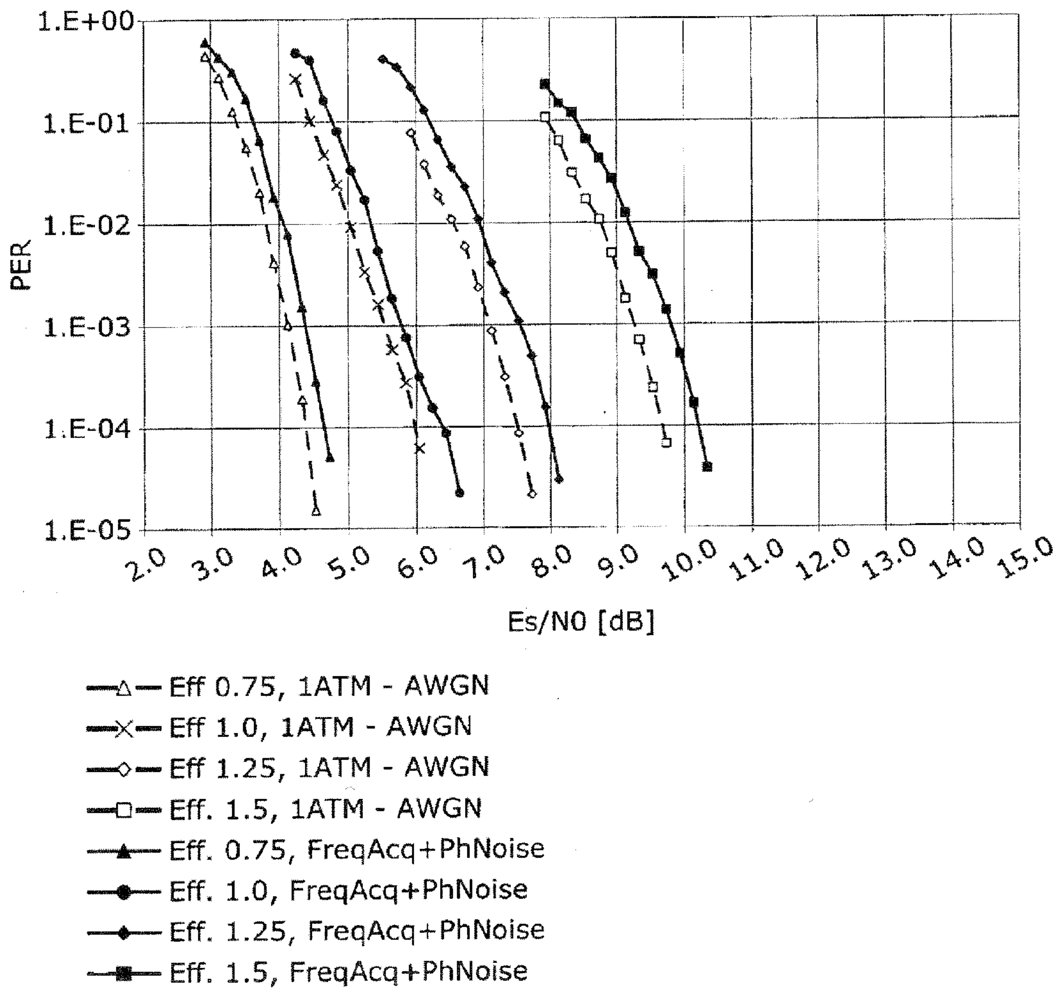
1.E+00
1.E-01
1.E-02
1.E-03
1.E-04
1.E-05
PER
2.0
3.0
4.0
5.0
6.0
7.0
8.0
9.0
10.0
11.0
12.0
13.0
14.0
15.0
Es/N0 [dB]
Eff 0.75, 1ATM - AWGN
Eff 1.0, 1ATM - AWGN
Eff 1.25, 1ATM - AWGN
Eff. 1.5, 1ATM - AWGN
Eff. 0.75, FreqAcq+PhNoise
Eff. 1.0, FreqAcq+PhNoise
Eff. 1.25, FreqAcq+PhNoise
Eff. 1.5, FreqAcq+PhNoise

FIG. 13

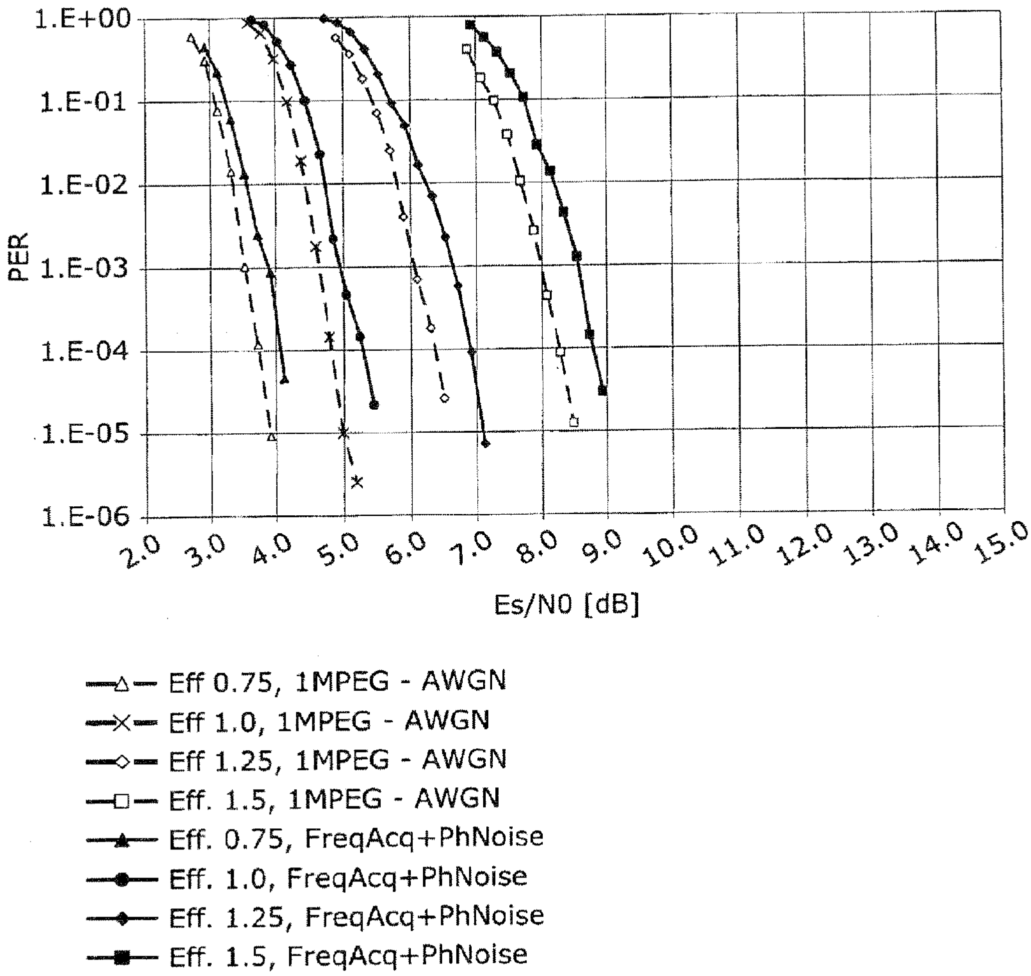
1.E+00
1.E-01
1.E-02
1.E-03
1.E-04
1.E-05
1.E-06
PER
2.0 3.0 4.0 5.0 6.0 7.0 8.0 9.0 10.0 11.0 12.0 13.0 14.0 15.0
Es/N0 [dB]
Eff 0.75, 1MPEG - AWGN
Eff 1.0, 1MPEG - AWGN
Eff 1.25, 1MPEG - AWGN
Eff. 1.5, 1MPEG - AWGN
Eff. 0.75, FreqAcq+PhNoise
Eff. 1.0, FreqAcq+PhNoise
Eff. 1.25, FreqAcq+PhNoise
Eff. 1.5, FreqAcq+PhNoise

FIG. 14

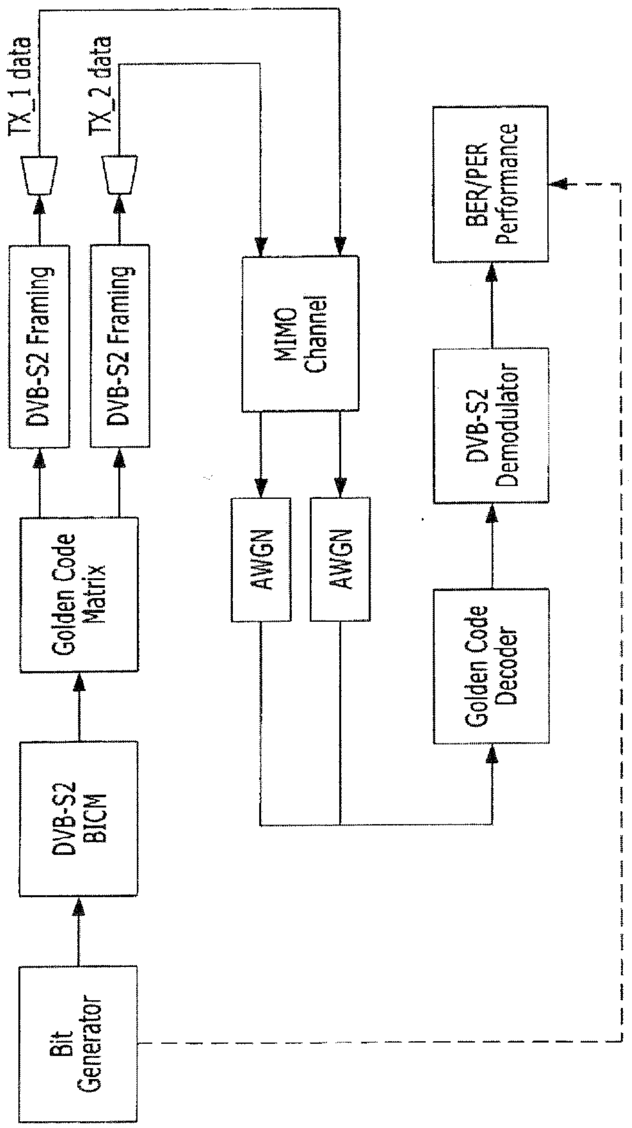
Bit Generator
DVB-S2 BICM
Golden Code Matrix
DVB-S2 Framing
DVB-S2 Framing
TX_1 data
TX_2 data
MIMO Channel
AWGN
AWGN
Golden Code Decoder
DVB-S2 Demodulator
BER/PER Performance